# EUROPÄISCHE PATENTSCHRIFT

(11) **EP 3 759 365 B1**
(45) Veröffentlichungstag und Bekanntmachung des Hinweises auf die Patenterteilung: **06.04.2022**
(21) Anmeldenummer: 19709388.3
(22) Anmeldetag: 26.02.2019
(51) Int. Cl.: F16C 17/02, F16C 17/12, F16C 33/10, F16C 17/24

(54) **VERFAHREN ZUM ENERGIESPARENDEN UND VERSCHLEISSARMEN BETREIBEN EINES GASLAGERS**
METHOD FOR ENERGY-SAVING, LOW-WEAR OPERATION OF A GAS BEARING
PROCÉDÉ D'ÉCONOMIE D'ÉNERGIE ET FONCTIONNEMENT À FAIBLE USURE D'UN PALIER À GAZ

(30) Priorität: 27.02.2018 DE 102018202900
(43) Veröffentlichungstag der Anmeldung: 06.01.2021
(73) Patentinhaber: Robert Bosch GmbH, 70442 Stuttgart (DE)
(72) Erfinder: HAHN, Sergei, 70199 Stuttgart (DE); BRAUN, Jochen, 71296 Heimsheim (DE)
(86) Internationale Anmeldenummer: PCT/EP2019/054655
(87) Internationale Veröffentlichungsnummer: WO 2019/166392

(56) Entgegenhaltungen:
- DE-A1-102012 208 762
- DE-A1-102014 223 126
- DE-A1-102015 210 574
- DE-A1-102015 211 447

## Beschreibung

Die vorliegende Erfindung betrifft ein Verfahren zum Betreiben eines Gaslagers, wie es beispielsweise in Verdichtern für die Versorgung von Brennstoffzellensystemen mit Luft oder Brenngas verwendbar ist.

### Stand der Technik

Bei Fahrzeugen mit Antriebssystemen auf der Basis von Brennstoffzellen wird in der Regel das Oxidationsmittel Sauerstoff aus der Umgebungsluft benutzt, um in der Brennstoffzelle mit einem wasserstoffhaltigen Gas zu Wasser (bzw. Wasserdampf) zu reagieren und dabei durch elektrochemische Wandlung eine elektrische Leistung zu liefern.

Hierfür ist es in der Regel erforderlich, die Umgebungsluft zu verdichten, um einen ausreichenden Sauerstoffpartialdruck für die Reaktion sowie eine möglichst homogene Verteilung über einen Brennstoffzellenstapel sicherzustellen sowie die Druckverluste im System zu überwinden. Brennstoffzellensysteme mit Verdichtern für die Umgebungsluft sind beispielsweise aus dem Dokument US 2017/241426 A1 bekannt.

Die benötigten Drücke und Massenströme an Umgebungsluft erfordern hohe Drehzahlen der Verdichter. Gleichzeitig muss die geförderte Luft ölfrei sein, da die Brennstoffzellen ansonsten verunreinigt und nach kurzer Zeit unbrauchbar würden. Daher werden in Verdichtern für die Luftversorgung von Brennstoffzellen vorzugsweise Gaslager eingesetzt, da sie ölfrei sind. Derartige Gaslager sind auch bei der US 2017/241426 A1 vorgesehen. Das bekannte Gaslager wird durch einen Rotor und einen Stator gebildet. Der Rotor geht bei einer Rotation gegen den Stator mit einer Abhebedrehzahl von einer Mischreibung mit dem Stator in eine Fluidreibung mit einem zwischen Stator und Rotor befindlichen Medium über. Die Drehzahl des Rotors wird auf oder oberhalb einer Leerlaufdrehzahl gehalten.

Gerade bei mobilen Anwendungen können hohe Beschleunigungskräfte auf das Gaslager einwirken, beispielsweise durch Stöße auf die Rotor-Welle-Einheit. Die Rückstellkraft, die das Gaslager ausüben kann, hängt vom Druck des Druckpolsters im Gaslager ab, und somit von der aktuellen Drehzahl. Kann die Rückstellkraft die Auslenkung des Rotors durch die Beschleunigungskraft nicht ausgleichen, kommt es zum Festkörperkontakt zwischen Rotor und Stator. Jeder solche Kontakt verursacht eine Degradation durch Reibeffekte. Diese Kontakte sind also ein "Summationsgift", das irgendwann im Ausfall des Gaslagers kulminiert.

Daher wird üblicherweise ein Sicherheitsfaktor zwischen der Leerlaufdrehzahl und der Abhebedrehzahl vorgesehen, um auch bei möglichen störenden Einflüssen auf den Betrieb des Gaslagers den Betrieb in der Mischreibung zu vermeiden.

Durch die DE 10 2015 211447 A1 ist ein Brennstoffzellensystem mit einem Verdichter bekannt, der eine Rotor-Welle-Einheit mit einem Gaslager in Form eines Luftfolienlagers aufweist. Eine Leerlaufdrehzahl der Rotor-Welle-Einheit soll ausreichend hoch gehalten werden, um Mischreibung im Gaslager zu vermeiden. Um eine unerwünschte Luftförderung des Verdichters bei Leerlaufdrehzahl zu vermeiden ist ein Bypassventil vorgesehen, durch das vom Verdichter geförderte Luft im Brennstoffzellensystem abgeleitet werden kann.

Durch die DE 10 2012 208762 A1 ist ein Verdichter mit einer Synchronmaschine bekannt, wobei der Verdichter eine Rotor-Welle-Einheit mit einem Luftlager aufweist. Der Verdichter weist ein mit der Rotor-Welle-Einheit verbundenes Laufrad auf. Die Mindestdrehzahl der Rotor-Welle-Einheit soll über der Abhebedrehzahl des Luftlagers liegen. Um beim Abschalten des Verdichters einen möglichst schnellen Stillstand zu erreichen wird das Laufrad mittels der Synchronmaschine abgebremst.

### Offenbarung der Erfindung

Es wurde nun erkannt, dass durch dynamische Reduzierung dieses Sicherheitsfaktors r_{N} auf das unbedingt erforderliche Maß zum einen viel Energie eingespart werden kann, da der Energieverbrauch überproportional mit der Drehzahl steigt. Ursache hierfür sind die mit höherer Drehzahl ansteigenden Reibungsverluste. Zum anderen wird auch die Geräuschentwicklung deutlich reduziert.

Im Rahmen der Erfindung wurde ein Verfahren zum Betreiben eines Gaslagers nach Anspruch 1 entwickelt. Das Gaslager wird durch einen Rotor und einen Stator gebildet. Bei einer Rotation gegen einen Stator mit einer Abhebedrehzahl n_{L} geht der Rotor von einer Mischreibung mit dem Stator in eine Fluidreibung mit einem zwischen Stator und Rotor befindlichen Medium über. Ursache hierfür sind aerodynamische Effekte und hier insbesondere der Aufbau eines Druckpolsters zwischen Rotor und Stator. Die Drehzahl des Rotors wird auf oder oberhalb einer Leerlaufdrehzahl n_{I}, gehalten. Ist die Leerlaufdrehzahl n_{I}, größer als die Abhebedrehzahl n_{L}, kann ein direkter mechanischer Kontakt zwischen dem Rotor und dem Stator vermieden werden. In Antwort auf eine erste Information, auf Grund derer eine Änderung ΔF der auf das Gaslager wirkenden Beschleunigungskräfte F zu erwarten ist, wird ein neuer Wert eines Sicherheitsfaktors r_{N}:=n_{I}/n_{L} zwischen der Leerlaufdrehzahl n_{I}, und der Abhebedrehzahl n_{L} ermittelt. Die Leerlaufdrehzahl n_{I}, des Gaslagers wird an den geänderten Wert des Sicherheitsfaktors r_{N} angepasst.

Erfindungsgemäß umfasst die erste Information mindestens einen Messwert eines Beschleunigungssensors. Gerade beim Einsatz in einem Fahrzeug können Gaslager plötzlich mit hohen Beschleunigungskräften beaufschlagt werden. Auf der anderen Seite sind Beschleunigungssensoren in jedem modernen Fahrzeug bereits vorhanden, beispielsweise im ABS- oder ESP-System. Da beispielsweise ein Brennstoffzellensystem in der Regel eine Verbindung zum CAN-Bus des Fahrzeugs benötigt und etwa das ABS- oder ESP-System ebenfalls mit dem CAN-Bus verbunden ist, ist weder ein zusätzlicher Sensor noch eine zusätzliche Verkabelung notwendig, um zwecks Aktualisierung des Sicherheitsfaktors r_{N} für den Betrieb des Gaslagers Beschleunigungen zu messen.

Es wurde weiterhin erkannt, dass die Abhebedrehzahl des Gaslagers nicht unbedingt konstant ist, sondern sich auf Grund verschiedener Einflüsse ändern kann. Werden diese Einflüsse überwacht, so kann beispielsweise der Sicherheitsfaktor r_{N} konstant gehalten und jede Erhöhung Δn_{L} der Abhebedrehzahl n_{L} multipliziert mit dem Sicherheitsfaktor r_{N} auch auf die Leerlaufdrehzahl n_{I} aufgeschlagen werden. Gerade derartige Einflüsse gehörten bislang zu den unbekannten Größen, die mit ein Grund für die Höhe des Sicherheitsfaktors r_{N} waren. Werden sie quantifiziert, so muss der Sicherheitsfaktor r_{N} nur die dann noch verbliebenen unbekannten Größen abdecken und kann dementsprechend reduziert werden.

Im einfachsten Fall können die anfänglichen Werte für den Sicherheitsfaktor r_{N}, konstant vorgegeben sein. Diese Werte können aber auch beispielsweise als Funktionen einer oder mehrerer Variablen oder auch als parametrisiertes Kennfeld oder Modell vorliegen.

Die im Betrieb eines Fahrzeugs auftretenden Beschleunigungskräfte sind selten das Produkt eines einmaligen Stoßes oder Schlages. Sie werden vielmehr in der Regel durch eine fortwährende Wechselwirkung zwischen dem Fahrzeug und dem befahrenen Fahrweg verursacht. Daher gibt eine Historie von Beschleunigungskräften einen gewissen Aufschluss über die künftig zu erwartenden Beschleunigungskräfte. Vorteilhaft werden daher aus einer in einem Beobachtungszeitraum T_{B} erhobenen Historie von Messwerten des Beschleunigungssensors die zu erwartenden Beschleunigungskräfte F während eines in der Zukunft liegenden Prognosezeitraums T_{P} ausgewertet.

Der Zustand ein und desselben Fahrwegabschnitts ändert sich zeitlich typischerweise nicht plötzlich, sondern nur allmählich. Daher können die auftretenden Beschleunigungskräfte zumindest ansatzweise anhand einer summarischen Bewertung des Zustands des Fahrwegabschnitts vorhergesagt werden. Vorteilhaft umfasst daher die erste Information mindestens eine Bewertung eines Zustandes eines Fahrwegabschnitts, auf dem sich ein Fahrzeug mit dem Gaslager befindet, und/oder dem sich das Fahrzeug nähert. Diese Bewertung kann aus beliebiger Quelle bezogen werden. Die Bewertung kann auch mit anderen Informationen, etwa dem Signal eines im Fahrzeug vorhandenen Schlaglochdetektors, zusammengeführt werden.

Beispielsweise kann die Bewertung, und/oder eine für diese Bewertung maßgebliche Messgröße, aus einer digitalen Karte, von einem über ein Netzwerk erreichbaren Informationsdienst, und/oder von einem weiteren Fahrzeug, bezogen werden. Kartographierte Information über den aktuellen Fahrwegzustand erhält somit einen Mehrwert dahingehend, dass sie den verschleißarmen und zugleich energiesparenden Betrieb von Fahrzeugen mit Gaslagern ermöglicht.

In einer weiteren besonders vorteilhaften Ausgestaltung umfasst die erste Information zusätzlich eine Information, dass ein Stillstand eines Fahrzeugs mit dem Gaslager für mindestens einen vorgegebenen Zeitraum zu erwarten ist. Dies umfasst sowohl den Fall, dass das Fahrzeug gegenwärtig bereits stillsteht und noch weiter stillstehen wird, als auch den Fall, dass das Fahrzeug erst in der Zukunft anhalten und für den vorgegebenen Zeitraum stehenbleiben wird. Wenn ein Stillstand zu erwarten ist, kann der Sicherheitsfaktor r_{N} für einen längeren Zeitraum besonders stark abgesenkt werden. Im Extremfall, wenn die das Gaslager enthaltende Baugruppe des Fahrzeugs während des Stillstands nicht benötigt wird, kann die Rotor-Welle-Einheit des Gaslagers komplett heruntergefahren werden.

Beim Herunterfahren der Rotor-Welle-Einheit wird nach dem Unterschreiten der Abhebedrehzahl n_{L} die verbliebene Rotationsenergie des Rotors durch den Festkörper-Kontakt mit dem Stator in Wärme umgesetzt. Das Herunterfahren und spätere erneute Hochfahren auf die ursprüngliche Drehzahl kostet also einen Energiebetrag, der gegen den ansonsten während des Leerlaufs des Gaslagers anfallenden Energiebetrag abzuwägen ist. Weiterhin geht der Festkörper-Kontakt zwischen dem Rotor und dem Stator immer auch mit einer im Stile eines Summationsgiftes wirkenden Degradation beider Bauteile einher. Somit kostet jedes Herunterfahren und erneute Hochfahren der Rotor-Welle-Einheit etwas Lebenserwartung des Gaslagers. Die zeitliche Grenze, ab der der zu erwartende Stillstand als hinreichend lange für ein komplettes Herunterfahren der Rotor-Welle-Einheit erachtet wird, dient der Abwägung der Kosten sowohl in Energie als auch in Lebensdauer gegen den ansonsten im Leerlauf anfallenden Energiebetrag.

In einer weiteren besonders vorteilhaften Ausgestaltung der Erfindung umfasst eine zweite Information mindestens einen Messwert, der sich auf die Umgebungsbedingungen bezieht, unter denen das Gaslager betrieben wird. So kann beispielsweise die Abhebedrehzahl n_{L} von der Umgebungstemperatur und/oder von der Luftfeuchtigkeit abhängen.

Ist beispielsweise Umgebungsluft das Medium zwischen Stator und Rotor, so wirken die Umgebungsbedingungen unmittelbar auf das Medium, und somit auch auf seine mechanischen Eigenschaften. Die mechanischen Eigenschaften werden jedoch nicht zwangsläufig nur hierdurch bestimmt, sondern können auch von Zustandsgrößen des Mediums abhängen, die nur innerhalb des Gaslagers messbar sind. So kann beispielsweise durch Reibeffekte bei hohen Drehzahlen die Temperatur der Luft als Medium des Gaslagers deutlich über die Umgebungstemperatur erwärmt werden. Daher umfasst vorteilhaft die zweite Information mindestens einen Messwert, der sich auf eine Zustandsgröße des Mediums bezieht.

Die Abhebedrehzahl n_{L} kann jedoch auch beispielsweise durch Alterung oder Abnutzung des Gaslagers verändert werden. Somit umfasst vorteilhaft die zweite Information mindestens einen Gebrauchsindikator des Gaslagers. Beispielsweise kommen eine Betriebsstundenzahl oder eine kumulierte Anzahl von Start-Stopp-Vorgängen als Gebrauchsindikatoren in Betracht. So kann beispielsweise ein Gaslager, das bereits viele Start-Stopp-Vorgänge hinter sich hat, mit erhöhtem Sicherheitsfaktor r_{N} betrieben werden, um zusätzliche Degradation zu vermeiden. Der Gebrauchsindikator darf auch Größen enthalten, die bereits für die zu erwartende Änderung ΔF der Beschleunigungskräfte F, und/oder für die zu erwartende Änderung Δn_{L} der Abhebedrehzahl n_{L}, relevant sind.

Die zweite Information kann weiterhin auch aus einem applizierten Modell des Gaslagers bezogen werden. Ein solches Modell kann insbesondere Größen, die nicht der direkten Messung zugänglich sind, aus zugänglichen Größen ermitteln. Diese zugänglichen Größen können beispielsweise durch Messung oder aus einer Cloud erhalten werden.

In einer weiteren besonders vorteilhaften Ausgestaltung wird die Leerlaufdrehzahl n_{I} zusätzlich einer gegenwärtigen oder künftigen Lastanforderung an ein Gerät mit dem Gaslager nachgeführt.

Befindet sich beispielsweise das Gaslager in einem Verdichter für die Zuführung eines Brenngases oder eines Oxidationsmittels zu einer Brennstoffzelle oder einem Brennstoffzellenstapel, so gibt es für jede Betriebsart der Brennstoffzelle, bzw. des Brennstoffzellenstapels, eine sinnvolle Leerlaufdrehzahl n_{I}, beispielsweise
- für den minimalen Lastpunkt, in dem der Brennstoffzellenstapel eine minimale Leistung abgibt;
- für eine Betriebsart, in der ein kleiner Luftmassenstrom über einen Luft-Bypass um den Brennstoffzellenstapel herumgeleitet wird, ohne dass elektrische Leistung abgegeben wird; oder
- für einen Teillastbereich, in dem ein Teil des Luftmassenstroms in den Brennstoffzellenstapel und ein anderer Teil um ihn herum geleitet wird.

Vorteilhaft wird die tatsächliche Drehzahl des Gaslagers durch Ansteuerung eines Antriebs der Rotor-Welle-Einheit des Gaslagers auf die angepasste Leerlaufdrehzahl n_{I} gesteuert und/oder geregelt. Dies überführt die Anpassung der Leerlaufdrehzahl n_{I} in eine physische Energieeinsparung beim Betrieb des Gaslagers. Beispielsweise kann die angepasste Leerlaufdrehzahl n_{I} einem Drehzahlregler des Gaslagers, der wiederum über eine Stellgröße auf den Antrieb einwirkt, als Sollwert oder als Randbedingung zugeführt werden.

Das Verfahren ist nicht nur für Gaslager in Verdichtern für mobile Brennstoffzellen vorteilhaft. Es kann beispielsweise auch bei Gaslagern in Verdichtern für stationäre Brennstoffzellen zum Einsatz kommen. Dort treten anders als im Fahrbetrieb keine plötzlichen Stöße auf. Dafür können stationäre Brennstoffzellen über längere Zeiträume eingesetzt werden als Fahrzeuge, so dass dann der Einfluss von Gebrauchs- und Alterungseffekten auf die Abhebedrehzahl n_{L} an Bedeutung gewinnt.

Das Verfahren kann weiterhin auch beispielsweise für Gaslager eingesetzt werden, die in Verdichtern für Kältemittel verbaut sind, beispielsweise in Kühlschränken oder Klimaanlagen. Hier ermöglicht die verringerte Leerlaufdrehzahl besonders vorteilhaft einen geräuschärmeren Betrieb.

Das Verfahren kann ganz oder teilweise in Software implementiert sein und insbesondere einem existierenden Computer oder Steuergerät die Fähigkeit verleihen, das Verfahren durchzuführen. Diese Software ist insofern ein eigenständig verkaufbares Produkt, beispielsweise für den Nachrüstmarkt. Daher bezieht sich die Erfindung auch auf ein Computerprogramm nach Anspruch 13 mit maschinenlesbaren Anweisungen, die, wenn sie auf einem Computer, und/oder auf einem Steuergerät, ausgeführt werden, den Computer, und/oder das Steuergerät, dazu veranlassen, ein Verfahren zum Betreiben eines Gaslagers gemäß der Erfindung auszuführen.

Ebenso bezieht sich die Erfindung auch auf einen maschinenlesbaren Datenträger oder ein Downloadprodukt mit dem Computerprogramm.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Prinzipieller Aufbau eines Gaslagers und Abhängigkeit des Reibungskoeffizienten µ von der Drehzahl n;
Figur 2 Ausführungsbeispiel des Verfahrens 100;
Figur 3 Beispielhafte Anpassungen des Sicherheitsfaktors r_{N}, bzw. der Abhebedrehzahl n_{L}.

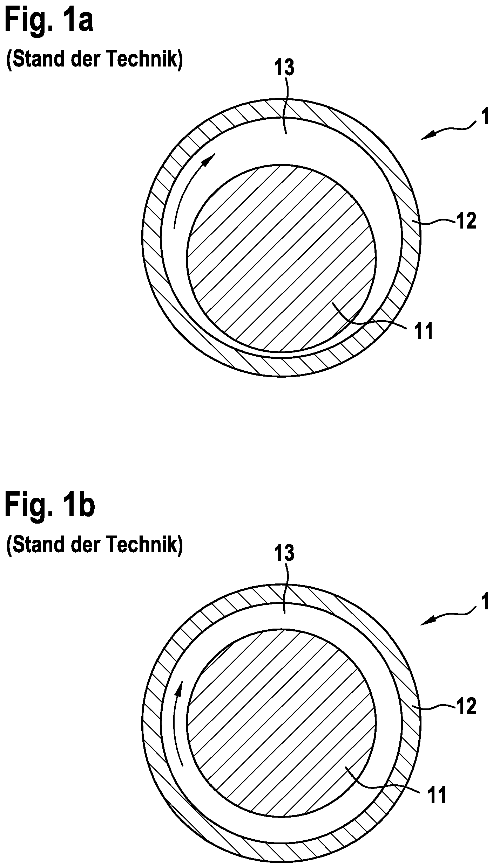

Figur 1a zeigt den prinzipiellen Aufbau eines Gaslagers 1 bei Stillstand, bzw. in einem Zustand, in dem die aktuelle Drehzahl n kleiner ist als die Abhebedrehzahl n_{L}, in Schnittzeichnung. Der Rotor 11 ist gegen den Stator 12 drehbar gelagert und liegt auf ihm auf. Im Übrigen ist der Zwischenraum zwischen dem Rotor 11 und dem Stator 12 mit dem Medium 13, beispielsweise Luft, gefüllt. Wird der Rotor 11 gegen den Stator 12 gedreht, was durch den Pfeil angedeutet ist, so gibt es auf Grund des Festkörperkontakts Mischreibung zwischen dem Rotor 11 und dem Stator 12.

Figur 1b zeigt das gleiche Gaslager 1 in dem Zustand, in dem die aktuelle Drehzahl n gleich oder größer der Abhebedrehzahl n_{L} ist. Das Medium 13 bildet nun ein allseitiges Druckpolster zwischen dem Rotor 11 und dem Stator 12. Bei einer radialen Auslenkung des Rotors 11 gegen den Stator 12 wird dort, wo sich der Rotor 11 dem Stator 12 nähert, der Druck des Mediums 13 erhöht. Dies übt eine Rückstellkraft aus, die der Auslenkung entgegen gerichtet ist.

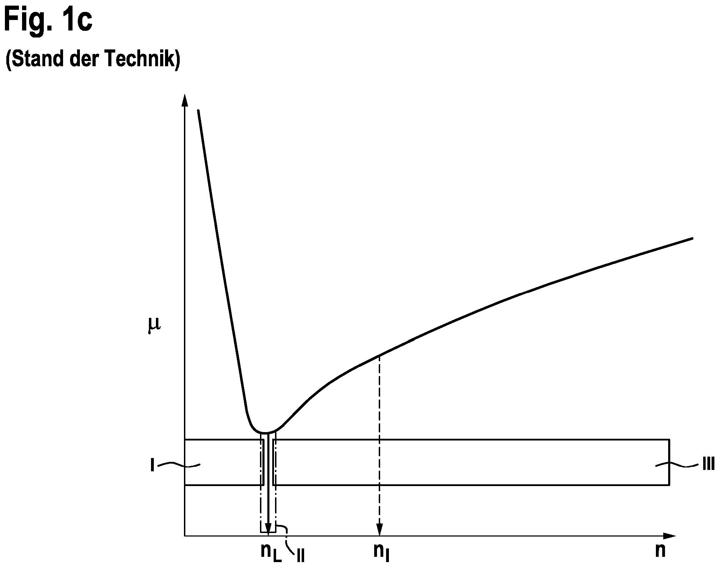

Figur 1c zeigt den Verlauf des Reibungskoeffizienten µ in dem Gaslager 1 als Funktion der Drehzahl n. Im Bereich I der Mischreibung dominiert die Festkörper-Reibung zwischen dem Rotor 11 und dem Stator 12. Mit steigender Drehzahl n wirkt die Ausbildung des Druckpolsters aus dem Medium 13 zunehmend der Kraft entgegen, die den Rotor 11 gegen den Stator 12 drückt. Damit sinkt per saldo der Reibungskoeffizient µ. Das Minimum des Reibungskoeffizienten µ wird bei der Abhebedrehzahl n_{L} im Übergangsbereich II zwischen Mischreibung und reiner Fluid-Reibung erreicht: Hier wird gerade die Festkörper-Reibung zwischen Rotor 11 und Stator 12 aufgehoben, während zugleich die Fluid-Reibung des Rotors 11 gegen das Medium 13 noch nicht stark ausgeprägt ist.

Für einen verschleißarmen Betrieb des Gaslagers 1 wird nun eine Leerlaufdrehzahl n_{I} gewählt, die im Bereich III der reinen Fluid-Reibung zwischen Rotor 11 und Medium 13 liegt. Dabei ist es energetisch günstig, wenn n_{I} möglichst nahe an n_{L} liegt, da die Fluid-Reibung mit zunehmender Drehzahl n deutlich ansteigt. Andererseits steigt mit zunehmender Annäherung von n_{I} an n_{L} das Risiko, dass es bei einer plötzlichen Krafteinwirkung auf das Gaslager 1 zu einem Festkörper-Kontakt zwischen dem Rotor 11 und dem Stator 12 kommt. Das Verfahren gemäß der Erfindung stellt hier einen optimalen Trade-Off bereit, d.h., die Leerlaufdrehzahl n_{I} wird so weit wie möglich vermindert bei vertretbarem Risiko eines Festkörper-Kontakts.

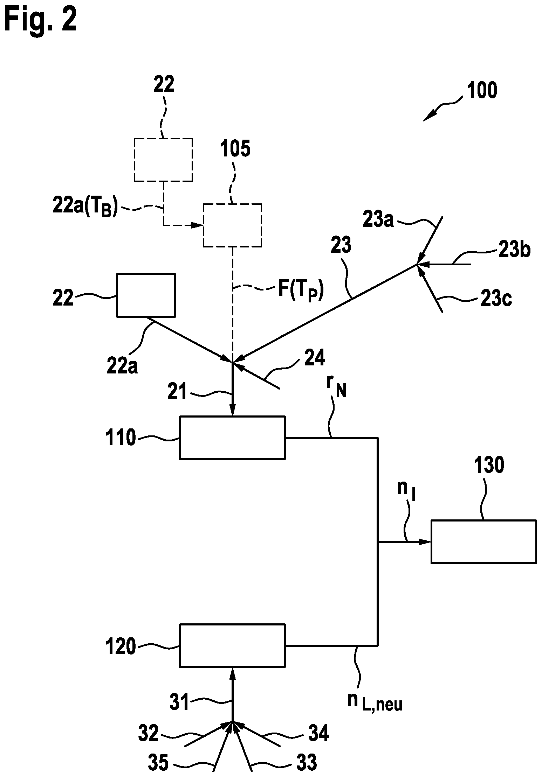

Figur 2 zeigt ein Ausführungsbeispiel des Verfahrens 100. Gemäß Schritt 110 wird ein neuer Wert des Sicherheitsfaktors r_{N} zwischen der Leerlaufdrehzahl n_{I} und der Abhebedrehzahl n_{L} in Reaktion auf eine Information 21, dass eine Änderung ΔF der auf das Gaslager wirkenden Beschleunigungskräfte F zu erwarten ist, ermittelt. Die Information 21 kann aus verschiedenen Quellen stammen, die auch miteinander kombiniert werden können.

Erfindungsgemäß umfasst die Information 21 einen Messwert 22a eines Beschleunigungssensors 22. Messwerte 22a des Beschleunigungssensors 22 können aber auch beispielsweise während eines Beobachtungszeitraums T_{B} erhoben werden, und im optionalen Schritt 105 können hieraus die zu erwartenden Beschleunigungskräfte F während eines in der Zukunft liegenden Prognosezeitraums T_{P} ausgewertet werden. Auf diese Weise kann der Sicherheitsfaktor r_{N} beispielsweise der wechselnden Qualität eines von einem Fahrzeug mit dem Gaslager 1 befahrenen Fahrweges nachgeführt werden. Es kann aber auch beispielsweise eine bereits fertige Bewertung 23 eines aktuell oder in naher Zukunft befahrenen Fahrwegabschnitts aus einer beliebigen Quelle bezogen werden, beispielsweise aus einer digitalen Karte 23a, von einem über ein Netzwerk erreichbaren Informationsdienst (Cloud) 23b, und/oder von einem weiteren Fahrzeug 23c (etwa über Vehicle-to-Vehicle-Kommunikation). Auch eine Information 24, dass ein Stillstand des Fahrzeugs mit dem Gaslager für mindestens einen vorgegebenen Zeitraum zu erwarten ist, kann herangezogen werden. Wie zuvor beschrieben, umfasst dies sowohl den Fall, dass ein gegenwärtiger Stillstand weiter andauert, als auch den Fall, dass der Stillstand erst künftig eintritt. Es können also Informationen sowohl über den aktuellen als auch über den prädiktiven Bewegungszustand des Fahrzeugs genutzt werden.

In Kombination hierzu kann in Schritt 120 ein neuer Wert n_{L,neu} für die Abhebedrehzahl n_{L} in Antwort auf eine Information 31, dass die Abhebedrehzahl n_{L} sich ändern wird, ermittelt werden. Die Information 31 kann beispielsweise Messwerte 32 von Umgebungsbedingungen, Messwerte 33 von Zustandsgrößen des Mediums 13, und/oder Gebrauchsindikatoren 34 des Gaslagers 1 umfassen. Weiterhin kann die Information 31 auch mit einem applizierten Modell 35 des Gaslagers 1 ermittelt werden, das beispielsweise im Steuergerät ausgewertet wird. Beispielsweise können Bedingungen des Gaslagers 1, wie etwa eine Temperatur, aus einem solchen Modell 35 zumindest näherungsweise ermittelt werden, um zusätzliche Sensoren einzusparen.

Unabhängig davon, ob Schritt 110 einzeln oder in Kombination mit Schritt 120 durchgeführt wird, entsteht im Ergebnis eine neue Leerlaufdrehzahl n_{I}. Diese wird in Schritt 130 am Gaslager 1 eingestellt und kann hierbei zusätzlich einer gegenwärtigen oder künftigen Lastanforderung an ein Gerät mit dem Gaslager 1 nachgeführt werden. Auf diese Weise kann etwa vermieden werden, dass die Drehzahl n ruckartig beschleunigt werden muss, um die Lastanforderung zu erfüllen.

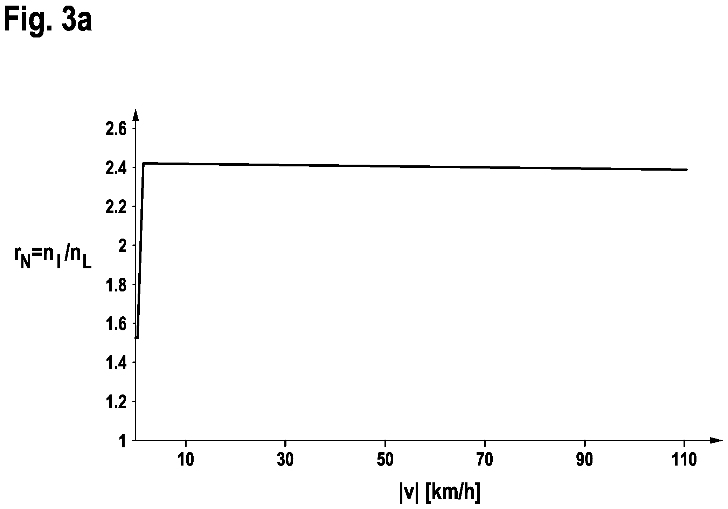

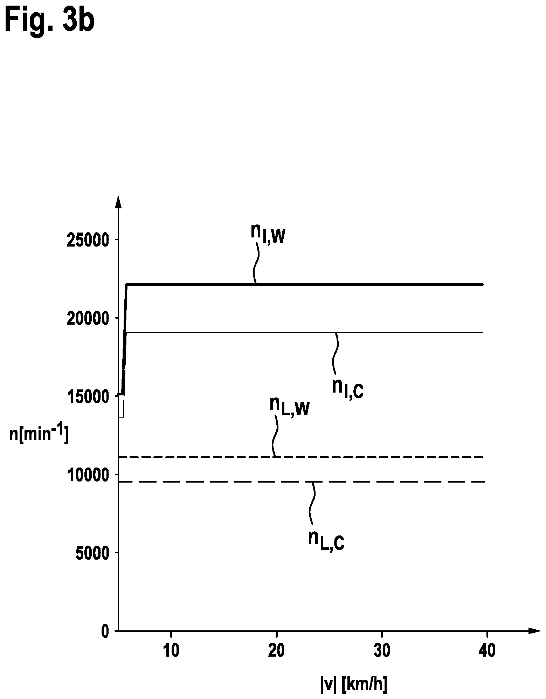

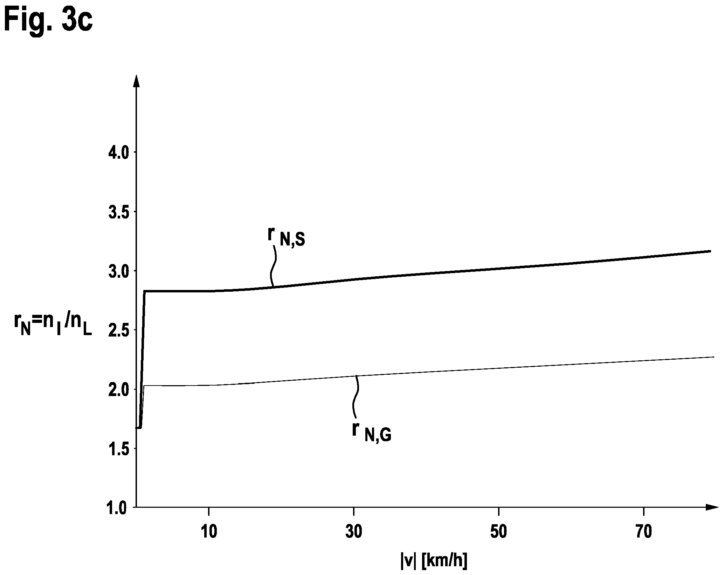

Figur 3 zeigt beispielhaft verschiedene Anpassungen des Sicherheitsfaktors r_{N}, bzw. der Abhebedrehzahl n_{L}.

In Figur 3a ist der Sicherheitsfaktor r_{N} abhängig von der absoluten Geschwindigkeit |v| eines Fahrzeugs mit dem Gaslager 1 aufgetragen. Der Sicherheitsfaktor r_{N}, der normalerweise 2,4 beträgt, ist für Fahrzeugstillstand deutlich auf 1,5 abgesenkt und steigt steil wieder auf 2,4, sobald das Fahrzeug bewegt wird. Das Verfahren ist bei Vorwärtsfahrt und Rückwärtsfahrt des Fahrzeugs gleichermaßen aktiv.

In Figur 3b sind die Auswirkungen einer Temperaturänderung auf die Abhebedrehzahl n_{L} dargestellt. Aufgetragen sind Drehzahlen n über der absoluten Fahrzeuggeschwindigkeit |v|.

Bei kalter Temperatur ist Abhebedrehzahl n_{L} auf einem ersten Niveau n_{L,C}. Bei warmer Temperatur ist die Abhebedrehzahl n_{L} auf einem zweiten, höheren Niveau n_{L,W}. Bei gleichem Sicherheitsfaktor r_{N} führt dies dazu, dass die Leerlaufdrehzahl n_{I} bei warmer Temperatur (Kurve n_{I,W}) gegenüber der Leerlaufdrehzahl n_{I} bei kalter Temperatur (Kurve n_{I,C}) erhöht ist.

Ähnlich zu Figur 3a ist der Sicherheitsfaktor n_{R} für Fahrzeugstillstand abgesenkt, d.h., bei Fahrzeugstillstand ist die Leerlaufdrehzahl n_{I} sowohl bei kalter Temperatur als auch bei warmer Temperatur jeweils deutlich geringer als während der Fahrt.

In Figur 3c ist beispielhaft der Sicherheitsfaktor r_{N} über der Fahrzeuggeschwindigkeit v aufgetragen, und zwar einmal für einen guten Fahrwegzustand (Kurve r_{N,G}) und einmal für einen schlechten Fahrwegzustand (Kurve r_{N,S}).

Bei Fahrzeugstillstand kann der Fahrwegzustand als solcher keine Stöße auf das Gaslager 1 bewirken. Daher sind dort die Sicherheitsfaktoren r_{N,G} und r_{N,S} für beide betrachteten Fahrwegzustände gleich. Wird das Fahrzeug bewegt, steigt der Sicherheitsfaktor r_{N,S} für einen schlechten Fahrweg jedoch auf ein deutlich höheres Niveau als der Sicherheitsfaktor r_{N,G} für einen guten Fahrweg. Weiterhin sind im Unterschied zu Figur 3a die Sicherheitsfaktoren r_{N,G} und r_{N,S} bei bewegtem Fahrzeug nicht konstant, sondern steigen mit zunehmender Geschwindigkeit v an. Damit wird dem Umstand Rechnung getragen, dass plötzliche Stöße durch Überfahren von Unebenheiten bei höheren Geschwindigkeiten zu größeren Kraftwirkungen auf das Gaslager 1 führen.

## Patentansprüche

1. Verfahren (100) zum Betreiben eines Gaslagers (1), wobei das Gaslager (1) durch einen Rotor (11) und einen Stator (12) gebildet wird, wobei der Rotor (11) bei einer Rotation gegen einen Stator (12) mit einer Abhebedrehzahl n_{L} von einer Mischreibung mit dem Stator (12) in eine Fluidreibung mit einem zwischen Stator (12) und Rotor (11) befindlichen Medium (13) übergeht, wobei die Drehzahl des Rotors (11) auf oder oberhalb einer Leerlaufdrehzahl n_{I} gehalten wird, **dadurch gekennzeichnet, dass** in Antwort auf eine erste Information (21), auf Grund derer eine Änderung ΔF der auf das Gaslager (1) wirkenden Beschleunigungskräfte F zu erwarten ist, ein neuer Wert eines Sicherheitsfaktors r_{N}:=n_{I/}n_{L} zwischen der Leerlaufdrehzahl n_{I} und der Abhebedrehzahl n_{L} ermittelt wird (110), dass die erste Information (21) mindestens einen Messwert eines Beschleunigungssensors (22) umfasst und dass die Leerlaufdrehzahl n_{I} des Gaslagers (1) an den geänderten Wert des Sicherheitsfaktors r_{N} angepasst wird (130).

2. Verfahren (100) nach Anspruch 1, **dadurch gekennzeichnet, dass** aus einer in einem Beobachtungszeitraum T_{B} erhobenen Historie von Messwerten (22a) des Beschleunigungssensors (22) die zu erwartenden Beschleunigungskräfte F während eines in der Zukunft liegenden Prognosezeitraums T_{P} ausgewertet werden (105).

3. Verfahren (100) nach Anspruch 1 oder 2, **dadurch gekennzeichnet, dass** die erste Information mindestens eine Bewertung (23) eines Zustandes eines Fahrwegabschnitts umfasst, auf dem sich ein Fahrzeug mit dem Gaslager (1) befindet, und/oder dem sich das Fahrzeug nähert.

4. Verfahren (100) nach Anspruch 3, **dadurch gekennzeichnet, dass** die Bewertung (23), und/oder eine für diese Bewertung (23) maßgebliche Messgröße, aus einer digitalen Karte (23a), von einem über ein Netzwerk erreichbaren Informationsdienst (23b), und/oder von einem weiteren Fahrzeug (23c), bezogen wird.

5. Verfahren (100) nach einem der Ansprüche 1 bis 4, **dadurch gekennzeichnet, dass** die erste Information (21) eine Information (24) umfasst, dass ein Stillstand eines Fahrzeugs mit dem Gaslager (1) für mindestens einen vorgegebenen Zeitraum zu erwarten ist.

6. Verfahren (100) nach einem der Ansprüche 1 bis 5, **dadurch gekennzeichnet, dass** in Antwort auf eine zweite Information (31), auf Grund derer eine Änderung Δn_{L} der Abhebedrehzahl n_{L} zu erwarten ist, ein neuer Wert n_{L,neu} für die Abhebedrehzahl n_{L} ermittelt wird (120), wobei die Leerlaufdrehzahl n_{I} des Gaslagers (1) an den geänderten Wert n_{I,neu} der Abhebedrehzahl n_{L}, angepasst wird (130), wobei die zweite Information (31) mindestens einen Messwert (32) umfasst, der sich auf die Umgebungsbedingungen bezieht, unter denen das Gaslager (1) betrieben wird.

7. Verfahren (100) nach Anspruch 6, **dadurch gekennzeichnet, dass** die zweite Information (31) mindestens einen Messwert (33) umfasst, der sich auf eine Zustandsgröße des Mediums (13) bezieht.

8. Verfahren (100) nach Anspruch 6 oder 7, **dadurch gekennzeichnet, dass** die zweite Information (31) mindestens einen Gebrauchsindikator (34) des Gaslagers (1) umfasst.

9. Verfahren (100) nach einem der Ansprüche 6 bis 8, **dadurch gekennzeichnet, dass** die zweite Information (31) mittels eines Modells (35) des Gaslagers (1) ermittelt wird.

10. Verfahren (100) nach einem der Ansprüche 1 bis 9, **dadurch gekennzeichnet, dass** die Leerlaufdrehzahl n_{I} zusätzlich einer gegenwärtigen oder künftigen Lastanforderung an ein Gerät mit dem Gaslager (1) nachgeführt wird (130).

11. Verfahren (100) nach einem der Ansprüche 1 bis 10, **dadurch gekennzeichnet, dass** die tatsächliche Drehzahl des Gaslagers (1) durch Ansteuerung eines Antriebs der Rotor-Welle-Einheit des Gaslagers (1) auf die angepasste Leerlaufdrehzahl n_{I} gesteuert und/oder geregelt wird.

12. Verfahren (100) nach einem der Ansprüche 1 bis 11, **dadurch gekennzeichnet, dass** ein Gaslager (1) in einem Verdichter für die Zuführung eines Brenngases oder eines Oxidationsmittels zu einer Brennstoffzelle gewählt wird.

13. Computerprogramm, enthaltend maschinenlesbare Anweisungen, die, wenn sie auf einem Computer, und/oder auf einem Steuergerät, ausgeführt werden, den Computer, und/oder das Steuergerät, dazu veranlassen, ein Verfahren (100) zum Betreiben eines Gaslagers (1) nach einem der Ansprüche 1 bis 12 auszuführen.

## Claims

1. Method (100) for operating a gas bearing (1), wherein the gas bearing (1) is formed by a rotor (11) and a stator (12), wherein as the rotor (11) rotates against a stator (12) at a lift-off rotational speed n_{L} said rotor transfers from a state of mixed friction with the stator (12) into a state of fluid friction with a medium (13) located between the stator (12) and the rotor (11), wherein the rotational speed of the rotor (11) is held at or above an idling rotational speed n_{I}, **characterized in that,** in response to a first piece of information (21) on the basis of which a change ΔF in the acceleration forces F that are acting on the gas bearing (1) is to be expected, a new value of a safety factor r_{N}:=n_{I}/n_{L} between the idling rotational speed n_{I} and the lift-off rotational speed n_{L} is determined (110), **in that** the first piece of information (21) includes at least one measured value from an acceleration sensor (22) and **in that** the idling rotational speed n_{I} of the gas bearing (1) is adapted (130) to the amended value of the safety factor r_{N}.

2. Method (100) according to Claim 1, **characterized in that** the acceleration forces F that are to be expected are evaluated (105) during a prognosis time period T_{P} that lies in the future from a history that is collected during an observation time period T_{B} of measured values (22a) from the acceleration sensor (22).

3. Method (100) according to Claim 1 or 2, **characterized in that** the first piece of information includes at least one evaluation (23) of a state of a road surface section on which a vehicle that has the gas bearing (1) is located and/or that said vehicle is approaching.

4. Method (100) according to Claim 3, **characterized in that** the evaluation (23) and/or a measured variable that is significant for this evaluation (23) is obtained from a digital map (23a), from an information service (23b), which can be accessed by way of a network, and/or from another vehicle (23c).

5. Method (100) according to one of Claims 1 to 4, **characterized in that** the first piece of information (21) includes a piece of information (24) that it is to be expected that a vehicle that has the gas bearing (1) will be at a standstill for at least a predetermined time period.

6. Method (100) according to one of Claims 1 to 5, **characterized in that,** in response to a second piece of information (31) on the basis of which a change Δn_{L} in the lift-off rotational speed n_{L} is to be expected, a new value n_{L,new} of the lift-off rotational speed n_{L} is determined (120), wherein the idling rotational speed n_{I} of the gas bearing (1) is adapted (130) to the amended value n_{L,new} of the lift-off rotational speed n_{L}, wherein the second piece of information (31) includes at least one measured value (32) that relates to the ambient conditions under which the gas bearing (1) is being operated.

7. Method (100) according to Claim 6, **characterized in that** the second piece of information (31) includes at least one measured value (33) that relates to a state variable of the medium (13).

8. Method (100) according to Claim 6 or 7, **characterized in that** the second piece of information (31) includes at least one usage indicator (34) of the gas bearing (1).

9. Method (100) according to one of Claims 6 to 8, **characterized in that** the second piece of information (31) is determined by means of a model (35) of the gas bearing (1).

10. Method (100) according to one of Claims 1 to 9, **characterized in that** the idling rotational speed n_{I} is updated (130) in addition to a current or future load requirement on a device that has the gas bearing (1).

11. Method (100) according to one of Claims 1 to 10, **characterized in that** the actual rotational speed of the gas bearing (1) is controlled and/or regulated by virtue of controlling a drive of the rotor-shaft unit of the gas bearing (1) to the adapted idling rotational speed n_{I}.

12. Method (100) according to one of Claims 1 to 11, **characterized in that** one gas bearing (1) is selected in a compressor for the supply of a combustion gas or oxidizing agent to a fuel cell.

13. Computer program containing machine-readable instructions that, when they are implemented on a computer and/or on a control device, cause the computer and/or the control device to perform a method (100) for operating a gas bearing (1) according to one of Claims 1 to 12.

## Revendications

1. Procédé (100) permettant de faire fonctionner un palier à gaz (1), le palier à gaz (1) étant formé par un rotor (11) et un stator (12), dans lequel, en cas de rotation par rapport à un stator (12) à un régime de décollage n_{L}, le rotor (11) passe d'une friction mixte avec le stator (12) à une friction fluide avec un milieu (13) se trouvant entre le stator (12) et le rotor (11), le régime du rotor (11) étant maintenu à ou au-dessus d'un régime de ralenti nₗ,
**caractérisé en ce qu'**en réponse à une première information (21), sur la base de laquelle une variation ΔF des forces d'accélération F agissant sur le palier à gaz (1) est à attendre, une nouvelle valeur d'un facteur de sécurité r_{N}:=n_{l/}n_{L} est déterminée (110) entre le régime de ralenti nₗ et le régime de décollement n_{L}, **en ce que** la première information (21) comprend au moins une valeur de mesure d'un capteur d'accélération (22), et **en ce que** le régime de ralenti nₗ du palier à gaz (1) est adapté (130) à la valeur modifiée du facteur de sécurité r_{N}.

2. Procédé (100) selon la revendication 1, **caractérisé en ce que** dans un historique de valeurs de mesure (22a) du capteur d'accélération (22), collecté pendant une période d'observation T_{B}, les forces d'accélération F à attendre sont évaluées (105) pendant une période de pronostic T_{P} située dans le futur.

3. Procédé (100) selon la revendication 1 ou 2, **caractérisé en ce que** la première information comprend au moins une évaluation (23) d'un état d'un tronçon de trajet sur lequel se trouve le véhicule équipé du palier à gaz (1), et/ou dont s'approche le véhicule.

4. Procédé (100) selon la revendication 3, **caractérisé en ce que** l'évaluation (23) et/ou une grandeur de mesure essentielle pour cette évaluation (23) est/sont obtenue(s) d'une carte numérique (23a), d'un service d'information (23b) accessible par un réseau, et/ou d'un autre véhicule (23c).

5. Procédé (100) selon l'une quelconque des revendications 1 à 4, **caractérisé en ce que** la première information (21) comprend une information (24) indiquant qu'un arrêt d'un véhicule équipé du palier à gaz (1) est à attendre pendant au moins une période prédéfinie.

6. Procédé (100) selon l'une quelconque des revendications 1 à 5, **caractérisé en ce qu'**en réponse à une deuxième information (31), sur la base de laquelle une variation Δn_{L} du régime de décollement n_{L} est à attendre, une nouvelle valeur n_{L,neu} est déterminée (120) pour le régime de décollement, le régime de ralenti nₗ du palier à gaz (1) étant adapté à la valeur modifiée n_{L,neu} du régime de décollement n_{L}, (130), la deuxième information (31) comprenant au moins une valeur de mesure (32) qui fait référence aux conditions ambiantes sous lesquelles fonctionne le palier à gaz (1).

7. Procédé (100) selon la revendication 6, **caractérisé en ce que** la deuxième information (31) comprend au moins une valeur de mesure (33) qui fait référence à une grandeur d'état du milieu (13).

8. Procédé (100) selon la revendication 6 ou 7, **caractérisé en ce que** la deuxième information (31) comprend au moins un indicateur d'usage (34) du palier à gaz (1).

9. Procédé (100) selon l'une quelconque des revendications 6 à 8, **caractérisé en ce que** la deuxième information (31) est déterminée au moyen d'un modèle (35) du palier à gaz (1).

10. Procédé (100) selon l'une quelconque des revendications 1 à 9, **caractérisé en ce que** le régime de ralenti nₗ est en outre asservi (130) à une demande de charge actuelle ou future au niveau d'un appareil équipé du palier à gaz (1).

11. Procédé (100) selon l'une quelconque des revendications 1 à 10, **caractérisé en ce que** le régime réel du palier à gaz (1) est commandé et/ou régulé par le pilotage d'un entraînement de l'unité rotor/arbre du palier à gaz (1) vers le régime de ralenti nₗ adapté.

12. Procédé (100) selon l'une quelconque des revendications 1 à 11, **caractérisé en ce qu'**un palier à gaz (1) dans un compresseur est sélectionné pour amener un gaz de combustion ou un oxydant à une pile à combustible.

13. Programme informatique, contenant des instructions lisibles par machine, qui, lorsqu'elles sont exécutées sur un ordinateur et/ou sur un appareil de commande, font que l'ordinateur et/ou l'appareil de commande exécute(nt) un procédé (100) permettant de faire fonctionner un palier à gaz (1) selon l'une quelconque des revendications 1 à 12.
